# EUROPÄISCHE PATENTANMELDUNG

(11) **EP 0 566 172 A1**
(43) Veröffentlichungstag der Anmeldung: **20.10.1993**
(21) Anmeldenummer: 93200702.4
(22) Anmeldetag: 11.03.1993
(51) Int. Cl.: B09B 3/00

(54) **Verfahren und Vorrichtung zur Demontage von Altautomobilen**

(30) Priorität: 11.04.1992 DE 4212299
(71) Anmelder: METALLGESELLSCHAFT Aktiengesellschaft, D-60015 Frankfurt (DE)
(72) Erfinder: Sattler, Hans-Peter, Dr., W-6380 Bad Homburg (DE)

(57) **Zusammenfassung**

Bei einem Verfahren zur Demontage von Altautomobilen (1) werden wiederverwertbare Aggregate manuell ausgebaut, dann das Altautomobil in einer Demontagestation (2) arretiert, die Betriebsmittel erfaßt, Stoßfänger (6) und Seitenplanken (7) abgetrennt, die Scheiben (9) und das Dach erfaßt (11), die Holme (13) durchtrennt, die Scheiben (9) und das Dach (11) entfernt, das Armaturenbrett (15) und die Sitze (16) aus der Karosserie herausgezogen und die Reifen (3) von den deformierten Felgen (5) entfernt. Die Restkarosserie (18) und das Dach (11) werden einer Shredder-Anlage zugeführt.

## Beschreibung

Die Erfindung betrifft ein Verfahren zur Demontage von Altautomobilen durch die Kombination von manuellen, mechanischen und automatischen Schritten in Einzelteile und Bauteilgruppen, bei dem nach einer Bestandsaufnahme wiederverwertbare Aggregate sowie Batterie, Katalysator oder dergleichen manuell ausgebaut werden.

Bis heute ist es üblich, etwa 95 % aller Altautomobile nach dem "Ausschlachten" durch entsprechende Verwertungsbetriebe mittels Shredder-Anlagen zu zerkleinern und durch entsprechende Trennverfahren in die Fraktionen Stahlschrott, Leichtmüll, wie Kunststoffe, Leder, Lacke, und eine Mischung aus Nichteisen-Metallschrott und Schwermüll, wie Gummi, Glas, Keramik, Holz, zu sortieren. Die metallischen Werkstoffe, die etwa 75 % des Gesamtgewichts des Altautomobils betragen, werden schon seit vielen Jahren in Stahl- und Umschmelzbetrieben wiederverwendet. Die restlichen 25 % des Gesamtgewichts bestehen zu 1/3 aus Kunststoffen, die anderen 2/3 aus Gummi, Glas, Textilien, Holz, Lack, Leder, Keramik und Flüssigkeiten. Diese Leicht- und Schwermüllanteile werden nachwievor in aller Regel auf Deponien endgelagert. Selbst wenn von verwertungsbetrieben für Altautomobile noch funktionstüchtige Gebrauchtteile aus dem Altautomobil ausgebaut werden, sind heute mindestens 20 % des Gesamtgewichts Leicht- und Schwermüll, mit dem niemand etwas anfangen kann und der auf die Sondermülldeponie muß, wenn eine thermische Verwertung nicht zur Verfügung steht, was meistens der Fall ist. Die ständige Verknappung des Deponieraums hat zu einer erheblichen Steigerung der Entsorgungskosten geführt, die das wirtschaftliche Betreiben von Shredder-Anlagen eingeengt hat und für die Zukunft überhaupt gefährdet. Zusammenfassend kann gesagt werden, daß die heutige Entsorgung von Altautomobilen zunehmend gefährdet ist durch
- fehlende Anlagen für eine thermische Verwertung von Sondermüll,
- generell abnehmende Deponiemöglichkeiten,
- steigende Kosten durch die Verknappung des Deponieraums und höhere Anforderungen an die Deponietechnik,
- Zunahme der Leicht- und Schwermüllmengen infolge des gestiegenen und weiter zunehmenden Kunststoffeinsatzes im Fahrzeug bei gleichzeitiger Zunahme des Aufkommens von Altautomobilen,
- rückläufige Erlöse aus dem Verkauf von Shredder-Schrott infolge der Verwendung von Kunststoffen anstelle von Stahl.

Angesichts dieser Aussichten geht das Bestreben heute dahin, das Altautomobil vor der Verwertung in einer Shredder-Anlage möglichst vollständig zu demontieren und das demontierte Material speziell zu rezyklieren und damit die Leicht- und Schwermüllmengen so gering wie möglich zu halten.

Von der Automobilindustrie werden derzeit in eigenen Pilotprojekten Altautomobile demontiert und die demontierten Materialien sortiert. Dabei werden alle Betriebsflüssigkeiten entsorgt, Reifen, Batterien, Katalysatoren entnommen, Gebrauchtteile ausgebaut und Glas sowie Kunststoffe aussortiert. Der verbleibende Rest des Altautomobils wird dann einer Shredder-Anlage zugeführt (ADAC Motorwelt 12/90, S. 14-18; ACE Lenkrad 7/90, S. 26-28).

In der DE-C-3 640 501 ist ein Verfahren zum Demontieren von Altautomobilen beschrieben, bei dem das Altautomobil nach einer Vorbeurteilungsstation nacheinander unterschiedlichen spezialisierten Demontagestationen, wie einer Station zur Entsorgung der Betriebsstoffe, einer Station zur Karosseriedemontage, einer Station zur Fahrwerkdemontage, einer Station zur Demontage des Fahrzeuginnenraumes und anschließend einer Bearbeitungsstation der Restkarosse, zugeführt wird.

In der DE-C-3 940 959 ist ein Verfahren zum Zerlegen und anschließenden Zerkleinern von Altautomobilen in einer Shredder-Anlage mit nachgeschalteter Separierung bekannt. Dabei wird vor der Aufgabe in den Shredder das Altautomobil durch manuelle Arbeiten oder in Demontagestationen von Flüssigkeiten und Kunststoffen getrennt. Das herausgelöste Material wird aufgeteilt in
a) Schrott mit Öl und Kunststoffen, wie Motor, Räder, Getriebe, Restkarossen,
b) Schrott ohne Öl mit recyclefähigen Kunststoffen, wie Türen, Hauben, Dach, Armaturenbrett, Stoßstangen,
c) Schrott ohne Öl mit recyclefähigen Kunststoffen, wie Sitze, Teppiche,
und in einer diskontinuierlichen Arbeitsweise unabhängig voneinander zu verschiedenen Zeiten in der gleichen Zerkleinerungsvorrichtung zerkleinert.

Aufgabe der vorliegenden Erfindung ist es, bei der Demontage von Altautomobilen manuelle Tätigkeiten weitgehend einzuschränken und das Verfahren zur Demontage so zu gestalten, daß möglichst wenig Reststoffe, d.h. Leicht- und Schwermüll als Sondermüll zu deponieren sind.

Die Lösung dieser Aufgabe besteht darin, daß das Altautomobil in einer Demontagestation arretiert, die Betriebsmittel, wie Kraftstoff, Öle, Frostschutzmittel, Bremsflüssigkeit, getrennt nach Stoffen automatisch erfaßt, die Stoßfänger und Seitenplanken abgetrennt, die Scheiben und das Dach erfaßt, die Holme durchtrennt, die Scheiben entfernt und das Dach abgehoben, das Armaturebrett und die Sitze herausgezogen und die Reifen von den deformierten Felgen der Räder entfernt werden.

Die einzelnen Demontageschritte werden automatisch, vorzugsweise rechnergesteuert, durchgeführt.

Die Vorrichtung zur Durchführung dieses Verfahrens besteht aus jeweils einer die Reifen umspannenden, die Räder arretierenden und die Felgen deformierenden, vorzugsweise schwenkbaren Greifzange, mehreren die Stoßfänger und ggf. die Seitenplanken abtrennenden Stößein, jeweils einer die Scheiben erfassenden Saugvorrichtung, einem das Dach erfassenden Magneten, einer auf jeder Seite des Altautomobils angeordneten verfahrbaren Trennvorrichtung, wie Säge- oder Schneidvorrichtung, zum Durchtrennen der Holme und Saugvorrichtungen zum Absaugen der Betriebsmittel, vorzugsweise am tiefsten Punkt der Behälter.

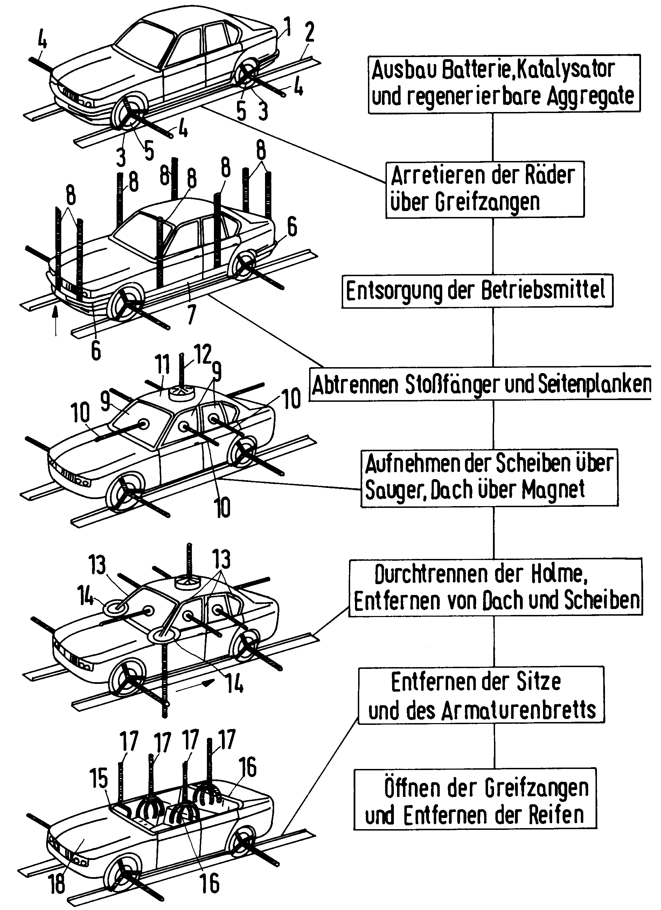

Die Erfindung ist in der Zeichnung beispielhaft mittels eines Fließschemas und der zu jedem einzelnen Verfahrensschritt zuzuordnenden Vorrichtung schematisch erläutert.

Nach einer im ersten Verfahrensschritt erfolgenden Bestandsaufnahme, bei der das Altautomobil (1) begutachtet wird, erfolgt im zweiten Verfahrensschritt der Ausbau von in dem Altautomobil (1) enthaltenen wiederverwertbaren Aggregaten, die nach einer Reparatur und Reinigung einem Ersatzteillager zugeführt werden können, sowie Batterie, Katalysator oder dergleichen. Im dritten Verfahrensschritt wird das Altautomobil (1) in der Demontagestation (2) durch Umspannen der Reifen (3) jeweils mittels einer mehrarmigen Greifzange (4) arretiert, wobei die Feigen (5) deformiert werden. Die Betriebsmittel, wie Kraftstoff, Öle, Bremsflüssigkeit, Kühlmittel, Schmierstoffe, Kühl- und Waschwasser, werden im vierten Verfahrensschritt getrennt und vollständig erfaßt, ordnungsgemäß zwischengelagert, teilweise wiederverwendet oder nach entsprechenden Analysen geeigneten Behandlungs- und Verwertungsanlagen zugeführt. Im fünften Verfahrensschritt werden die Stoßfänger (6) und die Seitenplanken (7) durch automatisch arbeitende Stößel (8) von der Karosserie abgetrennt. Anschließend werden die Scheiben (9) durch Saugmittel (10) und das Dach (11) durch einen Magneten (12) im sechsten Verfahrensschritt erfaßt. Im siebten Verfahrensschritt werden die Holme (13) mittels einer auf jeder Seite des Altautomobils (1) angeordneten und längs des Altautomobils (1) verschieblichen Sägeeinrichtung (14) durchtrennt. Nach dem Abheben des Dachs (11) durch den Magneten (12) und Entfernung der Scheiben (9) mittels der Saugmittel (10) im achten Verfahrensschritt werden das Armaturenbrett (15) sowie die Sitze (16) im neunten Verfahrensschritt durch mehrarmige Greiferzangen (17) aus der Restkarosserie (18) herausgezogen. Im letzten Verfahrensschritt werden die Reifen (3) durch Öffnen der Greiferzangen (4) von den Felgen (5) getrennt. Die verbleibende Restkarosse sowie das Dach werden einer Shredder-Anlage zugeführt.

Die mit der Erfindung erzielten Vorteile bestehen insbesondere darin, daß die bei der Demontage anfallenden Werkstoffe getrennt und nahezu vollständig erfaßbar sind und damit ihre optimale Entsorgung möglich ist. Mit geringem Platzbedarf ist eine weitgehend automatisierte Demontage des Altautomobils möglich, wobei relativ kurze Demontagezeiten erreicht werden. Der nach der Zerkleinerung und anschließenden Sortierung anfallende Schrott enthält nur noch wenige Reste nicht wiederverwertbaren Sondermülls, die auf eine Deponie verbracht werden müssen.

## Patentansprüche

1. Verfahren zur Demontage von Altautomobilen durch die Kombination von manuellen, mechanischen und automatischen Schritten, bei dem nach einer Bestandsaufnahme wiederverwertbare Aggregate sowie Batterie, Katalysator oder dergleichen manuell ausgebaut werden, dadurch gekennzeichnet, daß dann das Altautomobil in einer Demontagestation arretiert, die Betriebsmittel, wie Kraftstoff, Öle, Frostschutzmittel, Bremsflüssigkeit, Wasser, nach Stoffen getrennt erfaßt, die Stoßfänger und Seitenplanken abgetrennt, die Scheiben und das Dach erfaßt, die Holme durchtrennt` die Scheiben entfernt und das Dach abgehoben, das Armaturenbrett und die Sitze aus der Karosserie herausgezogen und schließlich die Reifen von den deformierten Felgen entfernt werden.

2. Verfahren nach Anspruch 1, dadurch gekennzeichnet, daß die Demontageschritte automatisch durchgeführt werden.

3. Verfahren nach den Ansprüchen 1 und 2, dadurch gekennzeichnet, daß die Demontageschritte rechnergesteuert durchgeführt werden.

4. Vorrichtung zur Durchführung des Verfahrens nach den Ansprüchen 1 bis 3, gekennzeichnet durch jeweils eine die Reifen (3) umspannende, die Räder arretierende und die Felgen (5) deformierende Greifzange (4), mehrere die Stoßfänger (6) und ggf. die Seitenplanken (7) von der Karosserie abtrennende Stößel (8), jeweils eine die Scheiben (9) erfassende Saugvorrichtung (10), einen das Dach (11) erfassenden Magneten (12), eine auf jeder Seite des Altautomobils (1) angeordnete verfahrbare Trennvorrichtung (14) zum Durchtrennen der Holme (13) und eine Saugvorrichtung zum Absaugen der Betriebsmittel.
